# EUROPÄISCHE PATENTSCHRIFT

(11) **EP 3 631 291 B1**
(45) Veröffentlichungstag und Bekanntmachung des Hinweises auf die Patenterteilung: **17.11.2021**
(21) Anmeldenummer: 18729618.1
(22) Anmeldetag: 30.05.2018
(51) Int. Cl.: F21V 8/00

(54) **DEKOR-LICHTLEITER-ELEMENT**
DECOR LIGHT GUIDE ELEMENT
ÉLÉMENT GUIDE DE LUMIÈRE DÉCORATIF

(30) Priorität: 30.05.2017 DE 102017111763
(43) Veröffentlichungstag der Anmeldung: 08.04.2020
(73) Patentinhaber: temicon GmbH, 44263 Dortmund (DE)
(72) Erfinder: HUMBACH, Oliver, 44388 Dortmund (DE); BÜLTERS, Mike, 44227 Dortmund (DE)
(74) Vertreter: Kalkoff & Partner Patentanwälte mbB
(86) Internationale Anmeldenummer: PCT/EP2018/064204
(87) Internationale Veröffentlichungsnummer: WO 2018/220025

(56) Entgegenhaltungen:
- WO-A1-2013/030042
- DE-A1-102015 016 719

## Beschreibung

Die Erfindung betrifft ein Dekor-Lichtleiter-Element, ein Verfahren zur Herstellung eines Dekor-Lichtleiter-Elements mit einer Beleuchtungsfunktion und einer Dekorfunktion sowie eine Dekoroberfläche aus mehreren Segmenten, wobei wenigstens eines der Segmente ein Dekor-Lichtleiter-Element ist.

Dekor-Lichtleiter-Elemente sind in vielfältiger Ausgestaltung aus dem Stand der Technik bekannt und sind dabei insbesondere zur flächigen Beleuchtung sowie zu dekorativen Zwecken vorgesehen. Dazu können die Dekor-Lichtleiter-Elemente eine farbige bzw. mehrfarbige Beleuchtung aufweisen oder aber eine beleuchtete Dekorschicht umfassen.

Die Druckschrift WO 2013 / 030 042 A1 offenbart beispielsweise ein Formteil zum Bilden eines Fahrzeugbauteils mit einem einstückigen Grundkörper, der eine erste Fläche und eine zweite Fläche aufweist, wobei sich die erste und die zweite Fläche schneiden. Der Grundkörper enthält zumindest im Bereich der ersten Fläche ein lichtleitendes Material, das dazu ausgestaltet ist, in den Bereich der ersten Fläche eingekoppeltes Licht auszukoppeln. Dabei ist eine Lichtquelle, insbesondere eine LED-Beleuchtung, vorgesehen, Licht über eine Seitenkante der ersten Fläche einzukoppeln. Weiterhin ist die erste Fläche zumindest bereichsweise mit einer Behandlung versehen, sodass eine Auskopplung von Licht aus dem Bereich der ersten Fläche in einem Bereich der Behandlung andersartig als in einem unbehandelten Bereich erfolgt. DE 10 2015 016719 A1 offenbart ein Dekor-Lichtleiter-Element der Präambel des Anspruchs 1.

Bei den Dekor-Lichtleiter-Elementen des Standes der Technik wird häufig mittels eines Lichtleiterelements ein Dekor beleuchtet, sodass im eingeschalteten Zustand des Dekor-Lichtleiter-Elements das Dekor beleuchtet bzw. hinterleuchtet und im ausgeschalteten Zustand das Dekor unbeleuchtet zu sehen ist.

Darüber hinaus existieren Dekor-Lichtleiter-Elemente, die im ausgeschalteten Zustand kein sichtbares Dekor aufweisen, sondern beispielsweise eine matte, nicht durchsichtige Beschichtung auf der Oberfläche, wodurch diese Dekor-Lichtleiter-Elemente im ausgeschalteten Zustand jedoch als optisch unattraktiv und ggf. sogar als störend empfunden werden.

Die existierenden Dekor-Lichtleiter-Elemente weisen eine Lichtauskopplung auf, die durch das Dekor in der Farbe, Helligkeit oder Lichtverteilung beeinflusst wird. Weiterhin ermöglichen sämtliche Dekor-Lichtleiter-Elemente des Standes der Technik auch keine alternative, voneinander unabhängige Nutzung einer Beleuchtungsfunktion und einer Dekorfunktion, da entweder das Dekor immer, sowohl im eingeschalteten, als auch im ausgeschalteten Zustand des Dekor-Lichtleiter-Elements sichtbar ist oder aber im ausgeschalteten Zustand kein Dekor sichtbar ist und somit das Dekor-Lichtleiter-Element optisch unattraktiv wirkt.

Der Erfindung liegt daher die Aufgabe zugrunde, ein Dekor-Lichtleiter-Element bereitzustellen, das einerseits eine von dem Dekor unabhängige Beleuchtung ermöglicht, andererseits jedoch im ausgeschalteten Zustand ein sichtbares Dekor aufweist, wobei die Helligkeit, Farbe und Lichtverteilung des ausgekoppelten Lichts nicht von dem Dekor beeinflusst wird.

Die Aufgabe wird erfindungsgemäß durch ein Dekor-Lichtleiter-Element gemäß Anspruch 1, durch eine Dekoroberfläche gemäß Anspruch 13 sowie durch ein Verfahren zur Herstellung eines Dekor-Lichtleiter-Elements gemäß Anspruch 14 gelöst. Vorteilhafte Weiterbildungen der Erfindung sind in den abhängigen Ansprüchen angegeben.

Das erfindungsgemäße Dekor-Lichtleiter-Element weist ein flächiges Lichtleiterelement und eine Lichtquelle zur Einkopplung von Licht in das Lichtleiterelement auf, wobei auf einer ersten Seite des Lichtleiterelements ein flächiges Dekorelement und auf der gegenüberliegenden Seite des Lichtleiterelements eine Mikrostrukturschicht zur Auskopplung des Lichts aus dem Lichtleiterelement angeordnet sind, wobei zwischen dem Lichtleiterelement und dem Dekorelement eine Zwischenschicht angeordnet ist, die eine geringere Brechzahl als das Material des Lichtleiterelements aufweist.

Die Anordnung einer Mikrostrukturierung an nur einer Seite des Lichtleiters ermöglicht dabei in vorteilhafter Weise, dass das Dekor-Lichtleiter-Element bei eingeschalteter Lichtquelle selbstleuchtend ist und lediglich als hell wahrgenommen wird. Dabei kommen die vom Dekor-Lichtleiter-Element abgestrahlten Lichtstrahlen nicht mit dem Dekorelement in Kontakt und werden daran insbesondere nicht reflektiert, sodass die Lichtfarbe, Lichtintensität und Lichtlenkung im eingeschalteten Zustand der Lichtquelle nicht von der Dekorschicht beeinflusst werden. Dagegen ist im ausgeschalteten Zustand der Lichtquelle das hinter dem Lichtleiterelement liegende Dekorelement farbecht und scharf sichtbar. Mittels der Erfindung ist also eine Oberfläche mit einer Beleuchtungsfunktion und einer Dekorfunktion verfügbar, wobei beide Funktionen alternativ zueinander und unabhängig voneinander nutzbar sind. Weiterhin wird das Licht durch die Zwischenschicht sowie durch die Mikrostrukturschicht mit einer definierten Lichtverteilung ausgekoppelt, wobei das ausgekoppelte Licht nicht in Kontakt mit dem Dekorelement kommt.

Weiterhin betrifft die Erfindung eine Dekoroberfläche aus mehreren, vorzugsweise jeweils eine Dekorschicht aufweisenden Segmenten, wobei wenigstens eines der Segmente ein erfindungsgemäßes Dekor-Lichtleiter-Element ist und wobei die Dekoroberfläche bevorzugt sowohl Segmente mit einer Lichtfunktion, als auch Segmente ohne Lichteinbindung aufweist. Weiterhin bevorzugt bilden alle Segmente eine großflächige Dekoroberfläche, in der besonders bevorzugt lediglich ein Teil der Segmente Lichtfunktionen übernehmen bzw. leuchtend sind. Grundsätzlich ist jedoch auch denkbar, dass alle Segmente der Dekoroberfläche als Dekor-Lichtleiter-Elemente gebildet sind.

Schließlich betrifft die Erfindung ein Verfahren zur Herstellung eines Dekor-Lichtleiter-Elements umfassend eine Anordnung eines Lichtleiterelements mit einer Lichtquelle zur Einkopplung von Licht gegenüber einem Dekorelement sowie einer Anordnung bzw. einer Herstellung einer Mikrostrukturschicht zur Auskopplung von Licht an der dem Dekorelement gegenüberliegenden Seite des Lichtleiterelements, wobei das Lichtleiterelement gegenüber dem Dekorelement derart angeordnet wird, dass im eingeschalteten Zustand der Lichtquelle das Licht aus dem Lichtleiterelement von dem Dekorelement unbeeinflusst ausgekoppelt wird und dass im ausgeschalteten Zustand der Lichtquelle eine Oberfläche mit einem Dekor des Dekorelements durch das Lichtleiterelement hindurch sichtbar wird.

Unter einem erfindungsgemäßen Dekor-Lichtleiter-Element wird grundsätzlich jede Vorrichtung verstanden, die über wenigstens eine Fläche Licht abstrahlen kann und bei der bei ausgeschaltetem Licht ein Dekor im Bereich der lichtabstrahlenden Fläche sichtbar wird, das im lichtabstrahlenden Zustand nicht erkennbar ist bzw. das die Eigenschaften des abgestrahlten Lichts nicht beeinflusst. Bevorzugt ist die lichtabstrahlende Fläche dabei eine flache oder gleichmäßig gekrümmte, besonders bevorzugt vollständig ebene Oberfläche des Dekor-Lichtleiter-Elements.

Das Lichtleiterelement, das Dekorelement und/oder die Mikrostrukturschicht können jeweils als Platte, Folie oder Schicht gebildet sein. Bevorzugt erstrecken sich das Lichtleiterelement, das Dekorelement und/oder die Mikrostrukturschicht über die gesamte Fläche des Dekor-Lichtleiter-Elements. Besonders bevorzugt weisen das Dekorelement und/oder das Lichtleiterelement und/oder die Mikrostrukturschicht eine identische Fläche auf und/oder sind deckungsgleich übereinander angeordnet. Weiterhin bevorzugt sind das Lichtleiterelement, das Dekorelement und/oder die Mikrostrukturschicht einstückig gebildet.

Weiterhin kann die Mikrostrukturschicht auch gemäß einem flächigen Layout aufgebracht sein, das bevorzugt im ausgeschalteten Zustand nicht erkennbar ist und im eingeschalteten Zustand sichtbar wird, da lediglich dieses Layout leuchtet. Auf diese Weise kann das Dekor-Lichtleiter-Element sowohl im ausgeschalteten, als auch im eingeschalteten Zustand zur Dekoration beitragen, da im einen Zustand das Dekor sichtbar ist und im anderen Zustand das Layout der Mikrostruktur zur Lichtauskopplung. Dabei kann sich das Layout gleichmäßig und/oder in sich wiederholenden Einheiten über die gesamte Oberfläche des Lichtleiters erstrecken. Alternativ kann das Layout auch nur auf einem Teil der Oberfläche des Lichtleiters in einer beliebigen Form angeordnet sein. Denkbar ist dabei die Darstellung von Schriftzeichen, Zahlen, Mustern, Figuren, Bildern, Fotos und/oder geometrischer Figuren.

Das Dekorelement weist wenigstens auf der dem Lichtleiterelement zugewandten Seite ein Dekor auf. Bei dem Dekor kann es sich um eine Oberflächenstrukturierung und/oder um eine Einfärbung der Oberfläche des Dekorelements handeln. Dabei kann die Einfärbung in beliebiger Weise erfolgt sein, beispielsweise durch Bedrucken oder einen anderweitigen Farbauftrag. Das Dekor kann jedoch auch durch eine Zusammenstellung verschiedenfarbiger oder unterschiedlicher Materialen erzeugt werden. Das Dekorelement kann dabei insbesondere eine dunkele Oberfläche, beispielsweise eine schwarze oder eine anthrazitfarbige Oberfläche, und/oder eine raue oder diffuse Oberflächenstruktur aufweisen. Dabei kann es sich um ein Metallteil, insbesondere mit gebürsteter Oberfläche, oder aber um ein Bauteil aus Kunststoff oder Holz handeln.

Erfindungsgemäß ist die Mikrostrukturschicht zur Auskopplung des Lichts lediglich an einer Seite des Lichtleiters vorgesehen, während an der dem Dekorelement zugewandten Seite des Lichtleiterelements keine Auskopplung von Licht stattfindet. Bevorzugt ist an der dem Dekorelement bzw. der Zwischenschicht zugewandten Oberfläche des Lichtleiterelements keine Auskopplungsstruktur und insbesondere keine Mikrostrukturschicht angeordnet, d.h., diese Oberfläche ist mikrostrukturschichtfrei gebildet, sodass besonders bevorzugt mittels genau einer Mikrostrukturschicht auf bzw. am Lichtleiterelement eine definierte, einseitige Lichtauskopplung erfolgt. Die Mikrostrukturschicht ist bevorzugt unmittelbar auf dem Lichtleiterelement angeordnet oder einstückig mit dem Lichtleiterelement gebildet. Besonders bevorzugt ist die Mikrostrukturschicht aus dem gleichen Material wie das Lichtleiterelement gebildet.

Erfindungsgemäß ist zwischen dem Lichtleiterelement und dem Dekorelement eine Zwischenschicht angeordnet, die eine geringere Brechzahl als das Material des Lichtleiterelements aufweist, wodurch in besonders einfacher Weise gewährleistet wird, dass im eingeschalteten Zustand der Lichtquelle das Dekor des Dekorelements nicht sichtbar ist. Dabei erstreckt sich die Zwischenschicht bevorzugt über die gesamte Fläche des Dekor-Lichtleiter-Elements bzw. trennt das Dekorelement vollständig von dem Lichtleiterelement. Bei der Zwischenschicht handelt es sich ganz besonders bevorzugt um eine LRI-Schicht (LRI = low refractive index) bzw. um eine Schicht mit einem geringeren Brechungsindex als der Brechungsindex des Lichtleiterelements. Bevorzugt liegt die Zwischenschicht unmittelbar und/oder flächig an der Oberfläche des Dekorelements und/oder des Lichtleiters an.

Nach einer bevorzugten Ausgestaltung des erfindungsgemäßen Dekor-Lichtleiter-Elements umfasst die Lichtquelle wenigstens eine, bevorzugt mehrere LEDs und ist besonders bevorzugt ausschließlich aus LEDs gebildet, wodurch in besonders einfacher Weise eine kostengünstige Herstellung sowie ein langlebiger und energiesparender Betrieb ermöglicht werden. Alternativ ist denkbar, dass die Lichtquelle genau eine einzige LED ist.

Bei einer vorteilhaften Weiterbildung des erfindungsgemäßen Dekor-Lichtleiter-Elements erfolgt die Einkopplung von Licht in das Lichtleiterelement mittels der Lichtquelle an wenigstens einer Seite des Lichtleiterelements, die bevorzugt verwinkelt, besonders bevorzugt rechtwinklig zum Dekorelement bzw. zu dessen Dekoroberfläche angeordnet ist. Ganz besonders bevorzugt erfolgt dabei die Einkopplung durch eine unmittelbare Anordnung der Lichtquelle an nur einer einzigen Seite des Lichtleiterelements, wobei grundsätzlich auch eine Einkopplung von mehreren Seiten und/oder an mehreren Punkten einer Seite zugleich möglich ist.

Bei einer vorteilhaften Weiterbildung des erfindungsgemäßen Dekor-Lichtleiter-Elements ist die Zwischenschicht durch einen zumindest teilweise oder vollständig luftgefüllten Hohlraum, eine Air-Cavity-Schicht, einen gasgefüllten, insbesondere luftgefüllten Spalt, oder alternativ auch durch eine Vakuumschicht gebildet.

Bei einer derartigen Ausgestaltung ist weiterhin bevorzugt, wenn zwischen dem Lichtleiterelement und dem Dekorelement Abstandshalter angeordnet sind, um den Abstand beider Elemente konstant zu halten. Bevorzugt sind diese Abstandshalter gleichmäßig über die Fläche des Dekor-Lichtleiter-Elements verteilt und/oder weisen einen gleichbleibenden Abstand zueinander auf. Besonders bevorzugt sind die Abstandhalter als Mikrostruktur gebildet, die ganz besonders bevorzugt einen nahezu punktförmigen Kontakt zum Lichtleiterelement aufweisen. Dabei sind die Kontakte bevorzugt derart klein gebildet, dass diese mit dem Auge nicht sichtbar sind. Bevorzugt ist der Kontakt kleiner als 100 µm, bevorzugt kleiner als 1 µm, ganz besonders bevorzugt kleiner als 500 nm und insbesondere bevorzugt kleiner als 200 nm. Die Kontaktflächen aller Abstandhalter betragen bevorzugt weniger als 5%, besonders bevorzugt weniger als 2 % und ganz besonders bevorzugt weniger als 1% der auf das Dekorelement zuweisenden Lichtleiteroberfläche. Ebenfalls bevorzugt weist das Material der Abstandhalter einen geringeren Brechungsindex als das Material des Lichtleiterelements auf, um eine Beleuchtung des Dekorelements über die Abstandshalter zu verhindern. Alternativ bevorzugt kann die Zwischenschicht auch eine Mikrostruktur mit Luftkavitäten aufweisen und ist besonders bevorzugt daraus gebildet.

Vorteilhaft ist auch eine Ausführung des Dekor-Lichtleiter-Elements bei dem die Breite der Zwischenschicht zwischen dem Lichtleiterelement und dem Dekorelement zwischen 100 nm und 500 µm, bevorzugt zwischen 500 nm und 200 µm und besonders bevorzugt zwischen 1 µm und 100 µm beträgt, wodurch einerseits eine kompakte Bauform des Dekor-Lichtleiter-Elements gewährleistet wird und andererseits eine Beleuchtung des Dekorelements mittels des Lichtleiterelements wirkungsvoll verhindert wird, sodass im eingeschalteten Zustand die Oberfläche des Dekorelements nicht sichtbar ist.

Bei einer bevorzugten Ausgestaltung des erfindungsgemäßen Dekor-Lichtleiter-Elements ist auf der Mikrostrukturschicht an der von dem Lichtleiterelement abgewandten Seite eine flächige Deckschicht angeordnet, die die Mikrostrukturschicht vor Beschädigungen sowie vor Verschmutzung schützt. Dabei kann die Deckschicht grundsätzlich als Platte, Folie oder Schicht und/oder einstückig gebildet sein. Besonders bevorzugt weist die Deckschicht einen identischen Brechungsindex auf, wie das Lichtleiterelement und/oder die Mikrostrukturschicht. Ganz besonders bevorzugt sind die Deckschicht und das Lichtleiterelement und/oder die Mikrostrukturschicht aus dem gleichen Material gebildet.

Bei einer besonders bevorzugten Ausgestaltung des erfindungsgemäßen Dekor-Lichtleiter-Elements sind das Lichtleiterelement, die Mikrostrukturschicht, die Zwischenschicht und/oder die Deckschicht transparent, insbesondere hochtransparent gebildet, wodurch das Dekorelement bzw. dessen Dekor bei der ausgeschalteten Lichtquelle durch das Lichtleiterelement, die Mikrostrukturschicht, die Zwischenschicht und/oder die Deckschicht hindurch besonders gut sichtbar ist. Besonders bevorzugt sind alle Komponenten des Dekor-Lichtleiter-Elements mit Ausnahme des Dekorelements hochtransparent.

Als hochtransparent wird dabei ein Material verstanden, das Licht ohne für einen Betrachter erkennbare Veränderung, insbesondere ohne eine Trübung und/oder Verringerung der Intensität leitet bzw. entsprechend durchstrahlbar ist. Dabei bezieht sich die Transparenz wenigstens auf alle durch die Lichtquelle abgestrahlten und/oder im sichtbaren Spektrum zwischen 380 nm und 780 nm vorhandenen Wellenlängen. Unter Transparenz wird eine Durchlässigkeit von eingestrahltem Licht von wenigstens 50%, bevorzugt wenigstens 75 % und besonders bevorzugt wenigstens 85% verstanden. Entsprechend ist ein Material hochtransparent, wenn es wenigstens 90%, bevorzugt wenigstens 95 % und besonders bevorzugt wenigstens 97 % des eingestrahlten Lichts durchlässt.

Insbesondere bevorzugt ist auch die Mikrostrukturierung zur Lichtauskopplung derart gebildet, dass diese keinen sichtbaren Effekt auf die Transparenz der Mikrostrukturschicht hat. Weiterhin bevorzugt ist das Lichtleiterelement, die Mikrostrukturschicht, die Zwischenschicht und/oder die Deckschicht derart gebildet, dass ein Lichtstrahl unverändert, insbesondere in Bezug auf seinen Winkel, hindurchtreten kann, wobei besonders bevorzugt keine sichtbare bzw. wahrnehmbare Bündelung, Streuung, Verzerrung oder anderweitige Veränderung des Strahlengangs auftritt. Schließlich ist die Mikrostrukturierung derart gebildet, dass keine Interferenzen mit dem eingestrahlten bzw. ausgekoppelten Licht, insbesondere im sichtbaren Wellenlängenbereich, auftreten.

Bei dem erfindungsgemäßen Dekor-Lichtleiter-Element ist die Mikrostrukturschicht aus gleichmäßig auf einer Oberfläche des Lichtleiterelements angeordneten Mikrostrukturen gebildet. Dabei stehen die Mikrostrukturen erfindungsgemäß aus der Oberfläche des Lichtleiterelements heraus. Die Mikrostrukturen können dabei sowohl einstückig mit dem Lichtleiterelement gebildet sein, als auch mit diesem verbunden, insbesondere verklebt sein. Alternativ kann die Mikrostrukturschicht bzw. die Mikrostruktur der Mikrostrukturschicht auch stochastisch oder mit einer definierten Verteilung aufgebracht sein.

Eine besonders bevorzugte Ausgestaltung des erfindungsgemäßen Dekor-Lichtleiter-Elements sieht vor, dass die Mikrostrukturschicht dadurch gebildet wird, dass auf eine Oberfläche des Dekorelements eine Mikrostruktur aufgelegt oder aufgebracht wird, wodurch nachfolgend im Kontakt zwischen dem Dekorelement und dem Lichtleiterelement die Zwischenschicht gebildet wird, die dabei bevorzugt aus luftgefüllten Kammern besteht. Entsprechend kann die Zwischenschicht durch eine Oberflächenstrukturierung des Dekorelements gebildet sein, wobei die Oberflächenstrukturierung als Abstandshalter wirkt.

Die Mikrostrukturen sind jeweils als hinterschnittene Strukturen gebildet, die besonders bevorzugt identisch zueinander sind und dabei eine gleiche Form, Größe, Höhe, Breite und/oder Länge aufweisen. Insbesondere bevorzugt sind die Mikrostrukturen parabolisch, zylindrisch, konisch oder trapezförmig, insbesondere als Trapezprisma gebildet. Dabei kann sowohl die kleinere, als auch die größere Fläche der Mikrostrukturen auf der Oberfläche des Lichtleiterelements angeordnet sein. Bevorzugt ist kleinere Fläche der Mikrostrukturen auf der Oberfläche des Lichtleiters angeordnet, sodass sich eine hinterschnittene Struktur zur Auskopplung des Lichts aus dem Lichtleiterelement ergibt.

Weiterhin bevorzugt weist das Dekor-Lichtleiter-Element eine Spiegelschicht auf, wobei besonders bevorzugt das Dekorelement als eine Spiegelschicht gebildet ist, sodass sich ein Betrachter bei einer ausgeschalteten Lichtquelle im Dekor-Lichtleiter-Element spiegeln kann. Dabei ist bevorzugt die verspiegelte Seite eines als Spiegelschicht gebildeten Dekorelements auf das Lichtleiterelement hin ausgerichtet.

Nach einer bevorzugten Weiterbildung des erfindungsgemäßen Dekor-Lichtleiter-Elements weist das Lichtleiterelement, die Zwischenschicht und/oder die Deckschicht wenigstens eine entspiegelte Oberfläche auf und besonders bevorzugt sind beide Oberflächen des Lichtleiterelements, der Zwischenschicht und/oder der Deckschicht innerhalb der Schichtstruktur des Dekor-Lichtleiter-Elements und/oder auf dessen Oberfläche entspiegelt, wodurch eine besonders gute Sichtbarkeit des Dekorelements erreicht werden kann.

Mehrere Ausführungsbeispiele eines erfindungsgemäßen Dekor-Lichtleiter-Elements werden nachstehend mit Bezug auf die Zeichnung näher erläutert. In der Figur zeigt:
- Fig. 1: eine schematische Ansicht des Aufbaus einer ersten Ausführungsform eines Dekor-Lichtleiter-Elements mit einer soliden Zwischenschicht,
- Fig. 2: eine schematische Ansicht des Aufbaus einer zweiten Ausführungsform eines Dekor-Lichtleiter-Elements mit einer gasgefüllten Zwischenschicht und
- Fig. 3: eine schematische Ansicht des Aufbaus einer dritten Ausführungsform eines Dekor-Lichtleiter-Elements mit einem Dekorelement mit strukturierter Oberfläche.

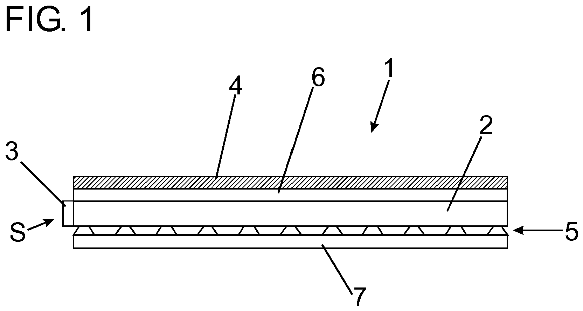

Bei einem in Fig. 1 dargestellten Dekor-Lichtleiter-Element 1 ist an einer Seite S eines transparenten Lichtleiterelements 2 eine LED-Lichtquelle 3 angeordnet, mittels der Licht in das Lichtleiterelement 2 eingekoppelt werden kann.

Das Lichtleiterelement 2 ist durch eine Zwischenschicht 6 beabstandet von und zugleich parallel zu einem Dekorelement 4 angeordnet. Das Lichtleiterelement 2, das Dekorelement 4 und die Zwischenschicht 6 sind dabei als flache, einstückige Elemente gebildet, wobei die Zwischenschicht 6 aus einem soliden Material mit einem geringeren Brechungsindex als der des Materials des Lichtleiterelements 2 gebildet ist. Das Dekorelement 4 weist eine farbige, auf das Lichtleiterelement 2 zugewandte Oberfläche auf.

Auf der dem Dekorelement 4 gegenüberliegenden Seite des Lichtleiterelements 2 ist unmittelbar auf der Oberfläche des Lichtleiterelements 2 eine Mikrostrukturschicht 5 angeordnet. Die Mikrostrukturschicht 5 ist aus dem gleichen Material wie das Lichtleiterelement 2 gebildet und weist gleichmäßig über die Oberfläche des Lichtleiterelements 2 verteilte Mikrostrukturen auf, die in der Richtung der Lichtauskopplung aus dem Lichtleiterelement 2 die Form eines Trapezes aufweisen, wobei sich die kleinere Fläche des Trapezes im unmittelbaren Kontakt zur Oberfläche des Lichtleiterelements 2 befindet. Auf diese Weise wird durch die Mikrostrukturelemente gemeinsam mit dem Lichtleiterelement 2 eine hinterschnittene Struktur zur Auskopplung von Licht geschaffen.

Unmittelbar auf der Oberfläche der Mikrostrukturschicht 5 ist an der dem Lichtleiterelement 2 abgewandten Seite eine Deckschicht 7 zum Schutz der Mikrostrukturen angeordnet, wobei die Mikrostrukturschicht 5 und die Deckschicht 7 ebenfalls transparent gebildet sind, sodass bei einer ausgeschalteten Lichtquelle 3 das Dekorelement 4 durch die übrigen Schichten des Dekor-Lichtleiter-Elements 1 unbeeinflusst und uneingeschränkt sichtbar sind.

Dagegen ist bei eingeschalteter Lichtquelle 3 die ein Dekor aufweisende Oberfläche des Dekorelements 4 nicht sichtbar, da das aus dem Lichtleiterelement 2 ausgekoppelte Licht das Dekorelement 4 nicht beleuchtet und lediglich in die entgegengesetzte, auf einen Betrachter gerichtete Richtung abstrahlt. Entsprechend werden die Intensität und die Farbe des vom Dekor-Lichtleiter-Element 1 abgestrahlten Lichts nicht durch das Dekorelement 4 beeinflusst. Dies ist vollständig unabhängig von der Farbe, Struktur, insbesondere Oberflächenstruktur und dem Material des Dekorelements 4, sodass ein beliebiges Dekorelement 4 verwendbar ist.

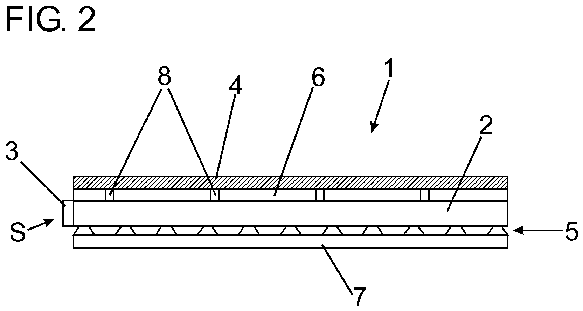

Das in Figur 2 dargestellte Dekor-Lichtleiter-Element 1 unterscheidet sich von der in Fig. 1 dargestellten Ausführung dadurch, dass die Zwischenschicht 6 als Luftspalt gebildet ist, wobei zwischen dem Lichtleiterelement 2 und dem Dekorelement 4 in regelmäßigen Abständen Abstandshalter 8 angeordnet sind, die das Lichtleiterelement 2 und das Dekorelement 4 in einem gleichbleibenden Abstand zueinander halten. Die Abstandshalter 8 weisen dabei eine punktförmige Kontaktfläche mit dem Lichtleiterelement 2 auf.

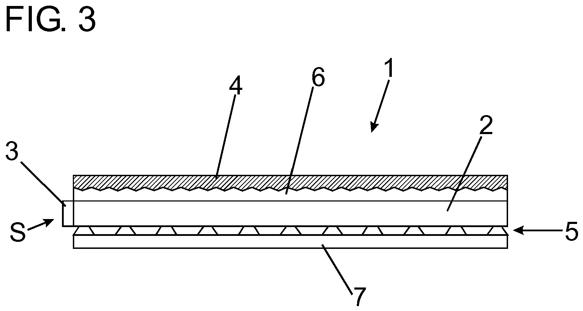

Bei dem in Figur 3 dargestellten Dekor-Lichtleiter-Element 1 weist das Dekorelement 4 auf der dem Lichtleiterelement 2 zugewandten Oberfläche eine deutliche Strukturierung auf, die im nicht beleuchteten Zustand des Dekor-Lichtleiter-Elements 1 gut sichtbar ist. Im Übrigen entspricht dieses Dekor-Lichtleiter-Element 1 der in Fig. 1 dargestellten Ausführung.

### Bezugszeichenliste

- 1: Dekor-Lichtleiter-Element
- 2: Lichtleiterelement
- 3: Lichtquelle
- 4: Dekorelement
- 5: Mikrostrukturschicht
- 6: Zwischenschicht
- 7: Deckschicht
- 8: Abstandshalter
- S: Seite des Lichtleiterelements

## Patentansprüche

1. Dekor-Lichtleiter-Element (1), mit
- einem flächigen Lichtleiterelement (2),
- einer Lichtquelle (3) zur Einkopplung von Licht in das Lichtleiterelement (2), wobei
- auf einer ersten Seite des Lichtleiterelements (2) ein flächiges Dekorelement (4) angeordnet ist und zwischen dem Lichtleiterelement (2) und dem Dekorelement (4) eine Zwischenschicht (6) angeordnet ist, die eine geringere Brechzahl als das Material des Lichtleiterelements (2) aufweist, um eine Auskopplung von Licht zu verhindern, **dadurch gekennzeichnet, dass**
- auf der gegenüberliegenden Seite des Lichtleiterelements (2) eine Mikrostrukturschicht (5) zur Auskopplung des Lichts aus dem Lichtleiterelement (2) angeordnet ist, wodurch das Lichtleiterelement (2) das Dekorelement (4) nicht beleuchtet, wobei
- die Mikrostrukturen der Mikrostrukturschicht (5) als hinterschnittene Strukturen gebildet sind, die gleichmäßig auf der Oberfläche des Lichtleiterelements (2) angeordnet sind und aus der Oberfläche des Lichtleiterelements (2) herausstehen

2. Dekor-Lichtleiter-Element nach Anspruch 1, **dadurch gekennzeichnet, dass** die Zwischenschicht (6) durch einen teilweise oder vollständig luftgefüllten Hohlraum gebildet ist.

3. Dekor-Lichtleiter-Element nach Anspruch 1 oder 2, **dadurch gekennzeichnet, dass** die Breite der Zwischenschicht (6) zwischen dem Lichtleiterelement (2) und dem Dekorelement (4) kleiner als 100 µm ist.

4. Dekor-Lichtleiter-Element nach einem der vorhergehenden Ansprüche, **dadurch gekennzeichnet, dass** auf der Mikrostrukturschicht (5) an der dem Lichtleiterelement (2) gegenüberliegenden Seite eine flächige Deckschicht (7) angeordnet ist.

5. Dekor-Lichtleiter-Element nach einem der vorhergehenden Ansprüche, **dadurch gekennzeichnet, dass** das Lichtleiterelement (2), die Mikrostrukturschicht (5), die Zwischenschicht (6) und die Deckschicht (7) transparent sind.

6. Dekor-Lichtleiter-Element nach einem der vorhergehenden Ansprüche, **dadurch gekennzeichnet, dass** zwischen dem Lichtleiterelement (2) und dem Dekorelement (4) Abstandshalter (8) angeordnet sind, die punktförmig an dem Lichtleiterelement (2) anliegen und bevorzugt durch eine auf die Oberfläche des Dekorelements (4) aufgebrachte Mikrostrukturierung gebildet sind.

7. Dekor-Lichtleiter-Element nach einem der vorhergehenden Ansprüche, **dadurch gekennzeichnet, dass** die Mikrostrukturen linsenförmig, konisch, parabolisch, zylindrisch oder trapezförmig, insbesondere als Trapezprisma gebildet, sind.

8. Dekor-Lichtleiter-Element nach einem der vorhergehenden Ansprüche, **dadurch gekennzeichnet, dass** das Dekorelement (4) als eine Spiegelschicht gebildet ist.

9. Dekor-Lichtleiter-Element nach einem der vorhergehenden Ansprüche, **dadurch gekennzeichnet, dass** das Lichtleiterelement (2), die Zwischenschicht (6) und/oder die Deckschicht (7) wenigstens eine entspiegelte Oberfläche aufweist.

10. Dekor-Lichtleiter-Element nach einem der vorhergehenden Ansprüche, **dadurch gekennzeichnet, dass** eine an die Zwischenschicht (6) angrenzende Oberfläche des Lichtleiterelements (2) frei von Auskopplungsstrukturen, insbesondere mikrostrukturschichtfrei gebildet ist.

11. Dekor-Lichtleiter-Element nach einem der vorhergehenden Ansprüche, **dadurch gekennzeichnet, dass** eine Mikrostruktur nicht gleichmäßig über die Mikrostrukturschicht (5), sondern gemäß einem flächigen Layout aufgebracht ist.

12. Dekor-Lichtleiter-Element nach einem der vorhergehenden Ansprüche, **dadurch gekennzeichnet, dass** das Dekorelement (4) lichtundurchlässig ist und sich über die gesamte Fläche des Lichtleiterelements (2) erstreckt.

13. Dekoroberfläche aus mehreren Segmenten, wobei wenigstens eines der Segmente ein Dekor-Lichtleiter-Element (1) nach einem der vorhergehenden Ansprüche ist.

14. Verfahren zur Herstellung eines Dekor-Lichtleiter-Elements (1) umfassend eine Beleuchtungsfunktion sowie eine Dekorfunktion, mit den Schritten:
- Anordnung eines Lichtleiterelements (2) mit einer Lichtquelle (3) zur Einkopplung von Licht gegenüber einem Dekorelement (4) mit einer Zwischenschicht (6) zwischen dem Lichtleiterelement (2) und dem Dekorelement (4), die eine geringere Brechzahl als das Material des Lichtleiterelements (2) aufweist, um eine Auskopplung von Licht zu verhindern,
- Anordnung bzw. Herstellung einer Mikrostrukturschicht (5) zur Auskopplung von Licht an der dem Dekorelement (4) gegenüberliegenden Seite des Lichtleiterelements (2), wobei die Mikrostrukturen der Mikrostrukturschicht (5) als hinterschnittene Strukturen gebildet werden, die gleichmäßig auf der Oberfläche des Lichtleiterelements (2) angeordnet sind und aus der Oberfläche des Lichtleiterelements (2) herausstehen, und
- wobei das Lichtleiterelement (2) gegenüber dem Dekorelement (4) derart angeordnet wird und die Auskopplung des Lichts derart erfolgt, dass im eingeschalteten Zustand der Lichtquelle (3) das Licht aus dem Lichtleiterelement (2) von dem Dekorelement (4) unbeeinflusst ausgekoppelt wird und dass im ausgeschalteten Zustand der Lichtquelle (3) eine Dekoroberfläche des Dekorelements (4) durch das Lichtleiterelement (2) hindurch sichtbar wird.

## Claims

1. A decorative light guide element (1), comprising
- a planar light guide element (2),
- a light source (3) for coupling light into the light guide element (2), wherein
- a planar decorative element (4) is arranged on a first side of the light guide element (2) and an intermediate layer (6) is arranged between the light guide element (2) and the decorative element (4), which intermediate layer has a lower refractive index than the material of the light guide element (2) in order to prevent outcoupling of light, **characterized in that**
- a microstructure layer (5) for coupling light out of the light guide element (2) is arranged on the opposite side of the light guide element (2),
as a result of which the light guide element (2) does not illuminate the decorative element (4), wherein
- the microstructures of the microstructure layer (5) are formed as indented structures which are evenly arranged on the surface of the light guide element (2) and project from the surface of the light guide element (2).

2. The decorative light guide element according to claim 1, **characterized in that** the intermediate layer (6) is formed by a hollow space that is partially or fully filled with air.

3. The decorative light guide element according to claim 1 or 2, **characterized in that** the width of the intermediate layer (6) between the light guide element (2) and the decorative element (4) is less than 100 µm.

4. The decorative light guide element according to one of the preceding claims, **characterized in that** a planar cover layer (7) is arranged on the microstructure layer (5) on the side opposite the light guide element (2).

5. The decorative light guide element according to one of the preceding claims, **characterized in that** the light guide element (2), the microstructure layer (5), the intermediate layer (6) and the cover layer (7) are transparent.

6. The decorative light guide element according to one of the preceding claims, **characterized in that** spacers (8) are arranged between the light guide element (2) and the decorative element (4), which spacers bear against the light guide element (2) in a punctiform manner and are preferably formed by a microstructuring applied to the surface of the decorative element (4).

7. The decorative light guide element according to one of the preceding claims, **characterized in that** the microstructures are designed to be lenticular, conical, parabolic, cylindrical or trapezoidal, in particular trapezoidal prisms.

8. The decorative light guide element according to one of the preceding claims, **characterized in that** the decorative element (4) is formed as a mirror layer.

9. The decorative light guide element according to one of the preceding claims, **characterized in that** the light guide element (2), the intermediate layer (6) and/or the cover layer (7) has/have at least one antireflection-coated surface.

10. The decorative light guide element according to one of the preceding claims, **characterized in that** a surface of the light guide element (2) adjoining the intermediate layer (6) is formed such that it is free of outcoupling structures, in particular free of microstructure layers.

11. The decorative light guide element according to one of the preceding claims, **characterized in that** a microstructure is not applied evenly over the microstructure layer (5), but rather in accordance with a planar layout.

12. The decorative light guide element according to one of the preceding claims, **characterized in that** the decorative element (4) is opaque and extends over the entire surface of the light guide element (2).

13. A decorative surface made of multiple segments, wherein at least one of the segments is a decorative light guide element (1) according to one of the preceding claims.

14. A method for producing a decorative light guide element (1) comprising an illumination function and a decorative function, having the steps of:
- arranging a light guide element (2) having a light source (3) for light incoupling opposite a decorative element (4), having an intermediate layer (6) between the light guide element (2) and the decorative element (4), which intermediate layer has a lower refractive index than the material of the light guide element (2) in order to prevent outcoupling of light,
- arranging or respectively producing a microstructure layer (5) for light outcoupling on the side of the light guide element (2) that is opposite the decorative element (4), wherein the microstructures of the microstructure layer (5) are formed as indented structures which are evenly arranged on the surface of the light guide element (2) and project from the surface of the light guide element (2), and
- wherein the light guide element (2) is arranged opposite the decorative element (4) and the light is coupled out such that, in the activated state of the light source (3), the light is coupled out of the light guide element (2) so as to be unaffected by the decorative element (4), and such that, in the deactivated state of the light source (3), a decorative surface of the decorative element (4) becomes visible through the light guide element (2).

## Revendications

1. Élément guide de lumière décoratif (1) comprenant :
- un élément guide de lumière surfacique (2),
- une source de lumière (3) pour le couplage de lumière dans l'élément guide de lumière (2), dans lequel
- un élément décoratif surfacique (4) est disposé sur un premier côté de l'élément guide de lumière (2) et une couche intermédiaire (6) est disposée entre l'élément guide de lumière (2) et l'élément décoratif (4), laquelle présente un indice de réfraction inférieur à celui du matériau de l'élément guide de lumière (2), afin d'empêcher un découplage de lumière, **caractérisé en ce que**
- une couche micro-structurée (5) destinée au découplage de lumière à partir de l'élément guide de lumière (2) est disposée sur le côté opposé de l'élément guide de lumière (2), moyennant quoi l'élément guide de lumière (2) n'éclaire pas l'élément décoratif (4), dans lequel
- les microstructures de la couche micro-structurée (5) sont formées comme des structures contre-dépouillées disposées de façon régulière sur la surface de l'élément guide de lumière (2) et faisant saillie hors de la surface de l'élément guide de lumière (2).

2. Élément guide de lumière décoratif selon la revendication 1, **caractérisé en ce que** la couche intermédiaire (6) est formée par un espace creux partiellement ou entièrement rempli d'air.

3. Élément guide de lumière décoratif selon la revendication 1 ou 2, **caractérisé en ce que** la largeur de la couche intermédiaire (6) entre l'élément guide de lumière (2) et l'élément décoratif (4) est inférieure à 100 µm.

4. Élément guide de lumière décoratif selon l'une des revendications précédentes, **caractérisé en ce qu'**une couche de revêtement surfacique (7) est disposée sur la couche micro-structurée (5), sur le côté opposé à l'élément guide de lumière (2).

5. Élément guide de lumière décoratif selon l'une des revendications précédentes, **caractérisé en ce que** l'élément guide de lumière (2), la couche micro-structurée (5), la couche intermédiaire (6) et la couche de revêtement (7) sont transparentes.

6. Élément guide de lumière décoratif selon l'une des revendications précédentes, **caractérisé en ce que** des espaceurs (8) sont disposés entre l'élément guide de lumière (2) et l'élément décoratif (4), lesquels s'appuient par points sur l'élément guide de lumière (2) et sont formés de préférence par une microstructuration appliquée sur la surface de l'élément décoratif (4).

7. Élément guide de lumière décoratif selon l'une des revendications précédentes, **caractérisé en ce que** les microstructures sont formées de façon lenticulaire, conique, parabolique, cylindrique ou trapézoïdale, en particulier comme des prismes trapézoïdaux.

8. Élément guide de lumière décoratif selon l'une des revendications précédentes, **caractérisé en ce que** l'élément décoratif (4) est formé comme une couche réfléchissante.

9. Élément guide de lumière décoratif selon l'une des revendications précédentes, **caractérisé en ce que** l'élément guide de lumière (2), la couche intermédiaire (6) et/ou la couche de revêtement (7) présente/présentent au moins une surface antireflet.

10. Élément guide de lumière décoratif selon l'une des revendications précédentes, **caractérisé en ce qu'**une surface de l'élément guide de lumière (2) adjacente à la couche intermédiaire (6) est exempte de structures de découplage, en particulier exempte de couche micro-structurée.

11. Élément guide de lumière décoratif selon l'une des revendications précédentes, **caractérisé en ce qu'**une microstructure n'est pas appliquée de façon régulière sur la couche micro-structurée (5), mais selon un agencement surfacique.

12. Élément guide de lumière décoratif selon l'une des revendications précédentes, **caractérisé en ce que** l'élément décoratif (4) est opaque et s'étend sur toute la surface de l'élément guide de lumière (2).

13. Surface décorative composée de plusieurs segments, dans laquelle l'un au moins des segments est un élément guide de lumière décoratif (1) selon l'une des revendications précédentes.

14. Procédé de fabrication d'un élément guide de lumière décoratif (1) comportant une fonction d'éclairage ainsi qu'une fonction décorative, avec les étapes suivantes :
- disposition d'un élément guide de lumière (2) avec une source de lumière (3) pour le couplage de lumière en face d'un élément décoratif (4) avec une couche intermédiaire (6) entre l'élément guide de lumière (2) et l'élément décoratif (4), laquelle présente un indice de réfraction inférieur à celui du matériau de l'élément guide de lumière (2), afin d'empêcher un découplage de lumière,
- disposition ou fabrication d'une couche micro-structurée (5) destinée au découplage de lumière sur le côté de l'élément guide de lumière (2) opposé à l'élément décoratif (4), dans lequel les microstructures de la couche micro-structurée (5) sont formées comme des structures contre-dépouillées, lesquelles sont disposées de façon régulière sur la surface de l'élément guide de lumière (2) et font saillie hors de la surface de l'élément guide de lumière (2), et
- dans lequel l'élément guide de lumière (2) est disposé de telle façon en face de l'élément décoratif (4) et le découplage de lumière est effectué de telle façon, que dans l'état activé de la source de lumière (3), la lumière est découplée de l'élément guide de lumière (2) sans être influencée par l'élément décoratif (4) et que dans l'état éteint de la source de lumière (3), une surface décorative de l'élément décoratif (4) devient visible à travers l'élément guide de lumière (2).
